(19) Europäisches Patentamt
European Patent Office
Office européen des brevets

(11) **EP 2 559 897 A2**

(12) **EUROPEAN PATENT APPLICATION**

(43) Date of publication:
    **20.02.2013 Bulletin 2013/08**

(51) Int Cl.:
    *F03D 11/00* *(2006.01)*

(21) Application number: **12179236.0**

(22) Date of filing: **03.08.2012**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority: **17.08.2011 US 201113211960**

(71) Applicant: **General Electric Company
    Schenectady, NY 12345 (US)**

(72) Inventor: **Castro, Jorge Gonzales
    49080 Osnabruck (DE)**

(74) Representative: **Bedford, Grant Richard
    Global Patent Operation - Europe
    GE International Inc.
    15 John Adam Street
    London WC2N 6LU (GB)**

(54) **Method and system for detecting an unusual operational condition of a wind turbine**

(57)    A method for detecting an unusual operational condition of a wind turbine (10) is provided. The method includes measuring an actual imbalance of a rotor (18) of said wind turbine (10), determining an imbalance deviation of the measured actual imbalance from an imbalance reference, and evaluating whether the imbalance deviation is above a predetermined imbalance threshold value.

FIG. 8

EP 2 559 897 A2

## Description

The subject matter described herein relates generally to methods and systems for detecting an unusual operational condition of a wind turbine, and more particularly, to methods and systems for detecting ice load at rotor blades of a wind turbine.

At least some known wind turbines include a tower and a nacelle mounted on the tower. A rotor is rotatably mounted to the nacelle and is coupled to a generator by a shaft. A plurality of blades extend from the rotor. The blades are oriented such that wind passing over the blades turns the rotor and rotates the shaft, thereby driving the generator to generate electricity.

Wind turbines are operated under different environmental conditions, e.g. at low temperatures combined with rain, snow and icing. Thereby, blades of the rotor of a wind turbine may be covered by ice. Such ice load can contribute to a rotor imbalance caused by forces acting upon individual rotor blades. With the increasing size of wind turbines, respectively the increasing size of rotor blades, ice load at rotor blades is an issue. Icing of wind turbine components, in particular at rotor blades of a wind turbine can cause an usual operation of the wind turbine, such as an operation with reduction of power conversion efficiency, load increase due to blade stall, fatigue due to increased imbalance, etc.

In one aspect according to the present invention, a method for detecting an unusual operational condition of a wind turbine is provided. The method includes measuring an actual imbalance of a rotor of said wind turbine, determining an imbalance deviation of the measured actual imbalance from an imbalance reference, and evaluating whether the imbalance deviation is above a predetermined imbalance threshold value.

In another aspect, a method for blade icing detection at a wind turbine is provided. The method includes measuring an environmental temperature, measuring a deflection of a rotor shaft of said wind turbine, determining a bending moment of the rotor shaft on basis of the measured deflection, determining a deviation of the bending moment from a historical value of the bending moment, and detecting blade icing on basis of the measured environmental temperature and the determined deviation of the bending moment.

In yet another aspect, a wind turbine is provided. The wind turbine includes a detection unit for detecting an unusual operational condition of the wind turbine, the detection unit having at least one proximity sensor for measuring a deflection of a rotor shaft of the wind turbine, a determination unit for determining a rotor imbalance on basis of the measured deflection, and an evaluation unit for comparing the determined rotor imbalance with an imbalance reference.

Various aspects, advantages and features of the present invention are apparent from the dependent claims, the description and the accompanying drawings, in which:.

Figure 1 is a perspective view of an exemplary wind turbine.

Figure 2 is an enlarged sectional view of a portion of the wind turbine shown in Figure 1.

Figure 3 depicts a portion of a wind turbine rotor showing a rotor blade for illustrating the occurrence of a bending moment.

Figure 4 is a block diagram illustrating components for providing a bending moment output.

Figure 5 is a schematic drawing showing a tilt of a rotor plane of a rotor caused by a combination of bending moments.

Figure 6 shows blade forces and resulting bending moments for a first rotational position of the rotor.

Figure 7 shows blade forces and resulting bending moments for a second rotational position of the rotor.

Figure 8 is a flowchart illustrating a method for detecting an unusual operational condition of a wind turbine.

Figure 9 is a flowchart illustrating a method for blade icing detection at a wind turbine.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Embodiments described herein include a wind turbine system that may be operated in cold weather conditions. Cold weather conditions may cause ice load at rotor blades of the wind turbine. Ice load may lead to rotor imbalance which in turn increases bending moments applied at the rotor shaft. According to embodiments described herein an unusual operational condition of the wind turbine due to e.g. ice load may be detected and appropriate countermeasures may be provided before damage to the wind energy systems occurs. More specifically, proximity sensors which are provided for detecting rotor imbalance may be used for evaluating ice load at one or more rotor blades of the wind turbine.

As used herein, the term "bending moment" is intended to be representative of a moment caused by a force applied at at least one rotor blade and acting on the rotor shaft. Thus, a bending moment caused by forces applied at a rotor blade of a wind turbine results in a torque, e.g. at a main shaft of the rotor. Forces applied at individual rotor blades result in respective bending moments, wherein individual bending moments may combine to a resulting torque or bending moment at the rotor shaft.

As used herein, the term "blade" or "rotor blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power.

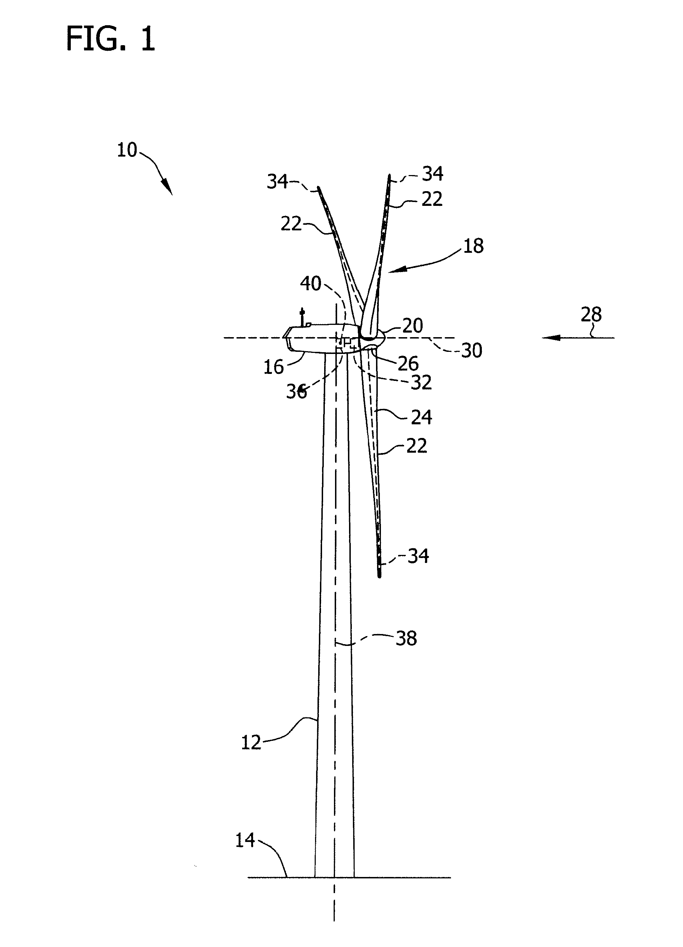

Figure 1 is a perspective view of an exemplary wind turbine 10. In the exemplary embodiment, wind turbine 10 is a horizontal-axis wind turbine 10. Alternatively, wind turbine 10 may be a vertical-axis wind turbine 10. In the exemplary embodiment, wind turbine 10 includes a tower 12 that extends from a support system 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Figure 1) between support system 14 and nacelle 16. In an alternative embodiment, tower 12 is any suitable type of tower having any suitable height.

Rotor blades 22 are spaced about hub 20 to facilitate rotating rotor 18 to enable kinetic energy to be transferred from the wind into usable mechanical energy, and subsequently, electrical energy. Rotor blades 22 are mated to hub 20 by coupling a blade root portion 24 to hub 20 at a plurality of load transfer regions 26. Load transfer regions 26 have a hub load transfer region and a blade load transfer region (both not shown in Figure 1). Loads induced to rotor blades 22 are transferred to hub 20 via load transfer regions 26.

In one embodiment, rotor blades 22 have a length ranging from about 15 meters (m) to about 91 m. Alternatively, rotor blades 22 may have any suitable length that enables wind turbine 10 to function as described herein. For example, other nonlimiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments.

As such, rotor blades 22 may deflect and/or rotate from a neutral, or non-deflected, position to a deflected position.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18.

In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

In exemplary embodiments described herein, pitch control for individual rotor blades may be used for compensating rotor imbalance caused by bending moments acting on the rotor 18. Bending moments may be detected using rotor shaft proximity sensors which are described herein below.

In the exemplary embodiment, control system 36 is shown as being centralized within nacelle 16, however, control system 36 may be a distributed system throughout wind turbine 10, on support system 14, within a wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels. Memories may include, without limitation, a computer-readable medium, such as a random access memory (RAM), and a computer-readable non-volatile medium, such as flash memory. Further, in an exemplary embodiment, output channels may include, without limitation, a control device, an operator interface monitor and/or a display.

Processors described herein process information transmitted from a plurality of electrical and electronic devices that may include, without limitation, sensors, actuators, compressors, control systems, and/or monitoring devices. Such processors may be physically located in, for example, a control system, a sensor, a monitoring device, a desktop computer, a laptop computer, a programmable logic controller (PLC) cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). Instructions that are executed may include, without limitation, wind turbine control system control commands. The execution of sequences of instructions is not limited to any specific combination of hardware circuitry and software instructions.

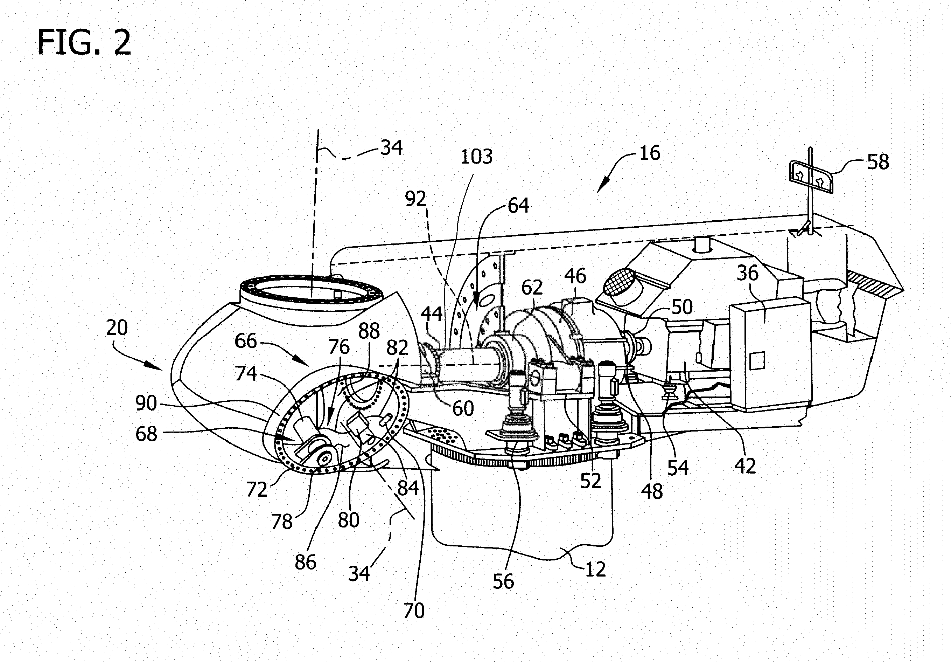

Figure 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle 16 by rotor shaft 44 (sometimes referred to as either a main shaft or a low speed shaft), a gearbox 46, a high speed shaft 48, and a coupling 50. In the exemplary embodiment, rotor shaft 44 is disposed coaxial to longitudinal axis 116 and has a main shaft flange (not shown in Figure 2). Rotation of rotor shaft 44 rotatably drives gearbox 46 that subsequently drives high speed shaft 48. High speed shaft 48 rotatably drives generator 42 with coupling 50 and rotation of high speed shaft 48 facilitates production of electrical power by generator 42. Gearbox 46 and generator 42 are supported by a support 52 and a support 54. In the exemplary embodiment, gearbox 46 utilizes a dual path geometry to drive high speed shaft 48. Alternatively, rotor shaft 44 is coupled directly to generator 42 with coupling 50.

Nacelle 16 also includes a yaw drive mechanism 56 that may be used to rotate nacelle 16 and hub 20 on yaw axis 38 (shown in Figure 1) to control the perspective of rotor blades 22 with respect to direction 28 of the wind. Nacelle 16 also includes at least one meteorological mast 58 that may include a temperature sensor, a wind vane and an anemometer (neither shown in Figure 2). The temperature sensor may be used for measuring an environmental temperature of the wind turbine. Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, support 52 and/or support 54, and forward support bearing 60 and aft support bearing 62, are sometimes referred to as a drive train 64.

In the exemplary embodiment, hub 20 includes a pitch assembly 66. Pitch assembly 66 includes one or more pitch drive systems 68 and at least one sensor 70. Each pitch drive system 68 is coupled to a respective rotor blade 22 (shown in Figure 1) for modulating the blade pitch of associated rotor blade 22 along pitch axis 34. Only one of three pitch drive systems 68 is shown in Figure 2.

In the exemplary embodiment, pitch assembly 66 includes at least one pitch bearing 72 coupled to hub 20 and to respective rotor blade 22 (shown in Figure 1) for rotating respective rotor blade 22 about pitch axis 34. Pitch drive system 68 includes a pitch drive motor 74, pitch drive gearbox 76, and pitch drive pinion 78. Pitch drive motor 74 is coupled to pitch drive gearbox 76 such that pitch drive motor 74 imparts mechanical force to pitch drive gearbox 76. Pitch drive gearbox 76 is coupled to pitch drive pinion 78 such that pitch drive pinion 78 is rotated by pitch drive gearbox 76. Pitch bearing 72 is coupled to pitch drive pinion 78 such that the rotation of pitch drive pinion 78 causes rotation of pitch bearing 72. More specifically, in the exemplary embodiment, pitch drive pinion 78 is coupled to pitch bearing 72 such that rotation of pitch drive gearbox 76 rotates pitch bearing 72 and rotor blade 22 about pitch axis 34 to change the blade pitch of blade 22.

Pitch drive system 68 is coupled to control system 36 for adjusting the blade pitch of rotor blade 22 upon receipt of one or more signals from control system 36. In the exemplary embodiment, pitch drive motor 74 is any suitable motor driven by electrical power and/or a hydraulic system that enables pitch assembly 66 to function as described herein. Alternatively, pitch assembly 66 may include any suitable structure, configuration, arrangement, and/or components such as, but not limited to, hydraulic cylinders, springs, and/or servo-mechanisms. Moreover, pitch assembly 66 may be driven by any suitable means such as, but not limited to, hydraulic fluid, and/or mechanical power, such as, but not limited to, induced spring forces and/or electromagnetic forces. In certain embodiments, pitch drive motor 74 is driven by energy extracted from a rotational inertia of hub 20 and/or a stored energy source (not shown) that supplies energy to components of wind turbine 10.

In exemplary embodiments described herein, pitch control for individual rotor blades 22 may be used for compensating rotor imbalance caused by bending moments acting on the rotor shaft 44. In this way, an unusual operational condition of the wind turbine can be avoided. Bending moments may be detected using proximity sensors which are described herein below. Such detection units may be arranged in the vicinity of the rotor shaft 44, e.g. at a position indicated by a reference numeral 103 in Figure 2.

It is noted here that the term "unusual operational condition" of the wind turbine is intended to be representative of any kind of operational condition which results in a rotor imbalance which is above a predetermined imbalance threshold value. The predetermined imbalance threshold value may be provided as an imbalance reference and may be stored, e.g. in a memory unit, prior to normal operation of the wind turbine. At least a first imbalance threshold value th1 and at least a second imbalance threshold value th2 may be provided, the second imbalance threshold th2 value being larger than the first imbalance threshold th1 value. A first control action may be carried out if the magnitude of the actual bending moment is larger than the first imbalance threshold value th1 and lower than the second imbalance threshold value th2. Furthermore, at least a second control action may be carried out if the magnitude of the actual bending moment is larger than the second imbalance threshold value th2.

Thereby, an unusual operational condition of the wind turbine may be determined if the actual rotor imbalance exceeds the first imbalance threshold value. The first imbalance threshold value may be used to initiate a minor control action such as, but not limited to, an alert measure for a wind turbine control center. Furthermore, an unusual operational condition of the wind turbine may be determined if the actual rotor imbalance exceeds the second imbalance threshold value being larger than the first imbalance threshold value. The second imbalance threshold value may be used to initiate a moderate control action such as, but not limited to, heating of rotor blades in order to remove ice load, adjusting pitch offset of individual rotor blades, etc. In addition to that, an unusual operational condition of the wind turbine may be determined if the actual rotor imbalance exceeds at least a third imbalance threshold value being larger than the second imbalance threshold value. The third imbalance threshold value may be used to initiate a severe control action such as, but not limited to, shut down of the wind turbine. Moreover, more or less than three individual imbalance threshold values may be pre-defined in order to be able to provide appropriate countermeasures on basis of a detected actual rotor imbalance. It is noted here that the term "ice load" is intended to be representative of any kind of load applied at the rotor blades such as ice, snow, mud, etc., the load causing a rotor imbalance which is considered in addition to a rotor imbalance which might be present due to manufacturing imperfections of the rotor blades 22 or other rotor components.

Pitch assembly 66 also includes one or more overspeed control systems 80 for controlling pitch drive system 68 during rotor overspeed. In the exemplary embodiment, pitch assembly 66 includes at least one overspeed control system 80 communicatively coupled to respective pitch drive system 68 for controlling pitch drive system 68 independently of control system 36. In one embodiment, pitch assembly 66 includes a plurality of overspeed control systems 80 that are each communicatively coupled to respective pitch drive system 68 to operate respective pitch drive system 68 independently of control system 36. Overspeed control system 80 is also communicatively coupled to sensor 70. In the exemplary embodiment, overspeed control system 80 is coupled to pitch drive system 68 and to sensor 70 with a plurality of cables 82. Alternatively, overspeed control system 80 is communicatively coupled to pitch drive system 68 and to sensor 70 using any suitable wired and/or wireless communications device. During normal operation of wind turbine 10, control system 36 controls pitch drive system 68 to adjust a pitch of rotor blade 22. In one embodiment, when rotor 18 operates at rotor overspeed, overspeed control system 80 overrides control system 36, such that control system 36 no longer controls pitch drive system 68 and overspeed control system 80 controls pitch drive system 68 to move rotor blade 22 to a feathered position to slow a rotation of rotor 18.

A power generator 84 is coupled to sensor 70, overspeed control system 80, and pitch drive system 68 to provide a source of power to pitch assembly 66. In the exemplary embodiment, power generator 84 provides a continuing source of power to pitch assembly 66 during operation of wind turbine 10. In an alternative embodiment, power generator 84 provides power to pitch assembly 66 during an electrical power loss event of wind turbine 10. The electrical power loss event may include power grid loss, malfunctioning of the turbine electrical system, and/or failure of the wind turbine control system 36. During the electrical power loss event, power generator 84 operates to provide electrical power to pitch assembly 66 such that pitch assembly 66 can operate during the electrical power loss event.

In the exemplary embodiment, pitch drive system 68, sensor 70, overspeed control system 80, cables 82, and power generator 84 are each positioned in a cavity 86 defined by an inner surface 88 of hub 20. In a particular embodiment, pitch drive system 68, sensor 70, overspeed control system 80, cables 82, and/or power generator 84 are coupled, directly or indirectly, to inner surface 88. In an alternative embodiment, pitch drive system 68, sensor 70, overspeed control system 80, cables 82, and power generator 84 are positioned with respect to an outer surface 90 of hub 20 and may be coupled, directly or indirectly, to outer surface 90.

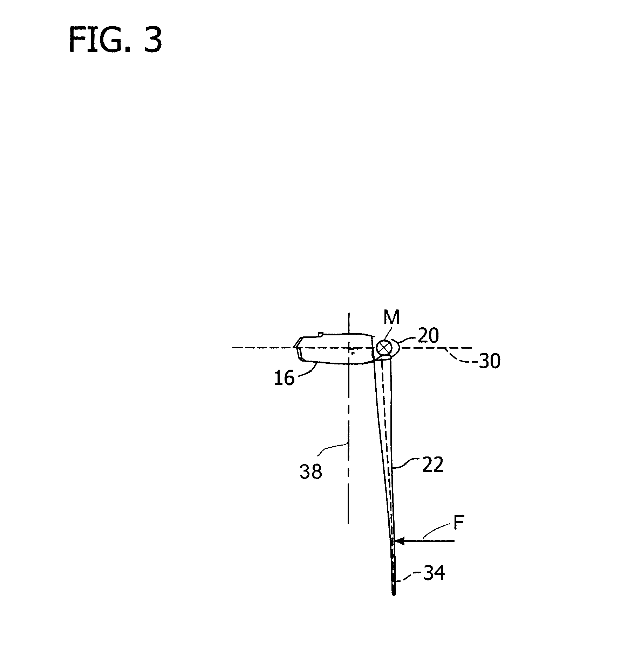

Figure 3 depicts a portion of the rotor 18 of a wind turbine 10 showing a rotor blade 22 for illustrating the occurrence of a bending moment $M$. One rotor blade 22 is shown to be attached at the rotatable hub 20. The generation of a bending moment $M$ is shown to take place by applying a force $F$ at a position along the length of the rotor blade 22. Thereby, the bending moment $M$ is oriented in a direction which is approximately orthogonal to both the axis of rotation 30 and the pitch axis 34 of the rotor blade. Albeit not illustrated in Figure 3, forces may act on each individual rotor blade such that a resulting bending moment $M$ may be obtained, the resulting bending moment being the sum of the individual bending moments. In particular, if the bending moments applied at individual rotor blades differ with respect to each other, rotor imbalance may result.

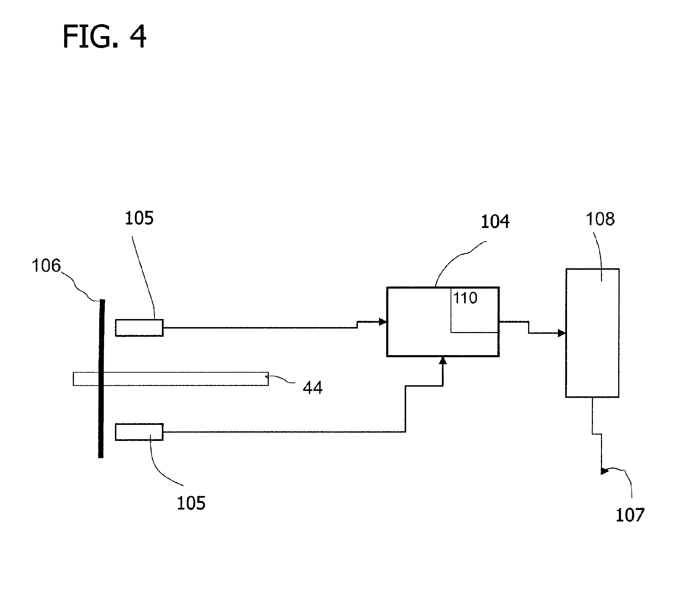

Figure 4 is a block diagram illustrating components of a monitoring system for providing an output signal which is representative of the bending moment. The rotor shaft 44 having a main shaft flange 106 is schematically shown. A detection unit 105 including at least two proximity sensors is provided for detecting a displacement of the rotor shaft 44 and thus a bending of the rotor shaft 44. Output signals of the proximity sensors 105 are received by a determination unit 104 which is for determining a rotor imbalance of the rotor 18. An output signal of the determination unit 104 is received by an evaluation unit 108 for evaluating an unusual operational condition of the wind turbine due to e.g. ice load on basis of a variation of the rotor imbalance. The monitoring system includes the detection unit 105 for detecting bending moments of the rotor shaft 44 and the determination unit 104 for determining the rotor imbalance of the rotor 18. Furthermore, the evaluation unit 108 is provided which is for evaluating the ice load on basis of a variation of the rotor imbalance. In other words, the monitoring system may measure an actual imbalance of the rotor and may then determine an imbalance deviation of the measured actual imbalance from an imbalance reference. The imbalance reference may be measured in advance, e.g. during normal (usual) operation of the wind turbine, and thus may be regarded as a "historical" imbalance. It is noted here that the expression "normal operation" of the wind turbine is intended to be representative of an operational condition where energy production is possible.

According to some embodiments described herein, the detection unit 105 may include at least one proximity sensor of the rotor shaft 44. Proximity sensors are used for detecting rotor shaft displacement and thus rotor imbalance and may be used for determination of an unusual operational condition of the wind turbine due to e.g. ice load. Furthermore, the detection unit 105 may include at least two proximity sensors arranged at about 90° with respect to each other about a circumference of the rotor shaft to measure the bending moment about two approximately orthogonal axes. The two axes may be approximately orthogonal to the axis of rotation 30, see Figure 3. Moreover, the detection unit 105 may include more than two proximity sensors for measuring bending moments such that measurement accuracy may be increased.

According to a typical embodiment, the determination unit 104 for determining the rotor imbalance of the rotor 18 may be used for determining a resulting torque acting upon the rotor shaft 44. It is noted here that the resulting torque may be obtained by superposing bending moments caused by rotor blade forces *F*. According to a further typical embodiment the evaluation unit 108 may include a moving-average generator for providing a moving average of detected bending moments.

In addition to the components shown in Figure 4 the monitoring system for detecting an unusual operational condition of the wind turbine due to e.g. ice load may include a temperature sensor 58 for detecting environmental temperature of the wind turbine. Such environmental conditions may be measured in order to provide an alert function for the monitoring system. According to a typical embodiment weather conditions where icing of wind turbine components may occur, can be detected. Thus, the monitoring system may be activated once the environmental temperature of the wind turbine 10 falls below a predetermined temperature threshold value, e.g. below a value of 2°C.

According to a typical embodiment, measuring the environmental temperature may include determining whether the measured temperature is below the predetermined temperature threshold value. The predetermined temperature threshold value may be set at a temperature value in a range from -5°C to +10°C, typically in a range from 0°C to +5°C, and more typically may amount to approximately +2°C.

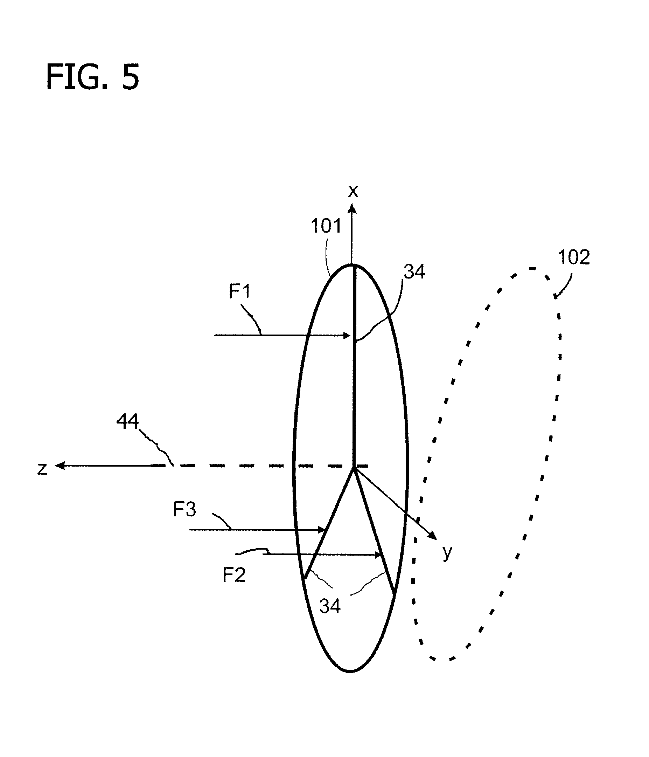

Figure 5 is a schematic drawing showing a tilt of a rotor plane of a rotor caused by a combination of bending moments. It is noted here, albeit a number of three rotor blades 22 are shown in the figures, one, two, three or more rotor blades 22 may be provided at the rotor 18 of the wind turbine 10. As shown in Figure 5, forces F1, F2, and F3 are applied at the individual rotor blades 22, each force resulting in a respective bending moment. A rotor plane 101 which is defined by the three pitch axes 34 of the respective rotor blades 22, may thus receive imbalanced forces such that a tilt of the rotor plane 101 may occur (exaggerated in Figure 5). A superposition of the forces may result in a tilted rotor plane 102, as indicated by the dotted circle in Figure 5.

It is noted here that the rotor plane 101 may experience an imbalance, which then may be changed due to the unusual operational condition of the wind turbine such that a tilted rotor plane 102 occurs. In other words, the imbalance occurring during normal operational conditions of the wind turbine, and resulting in an orientation of the rotor plane indicated by a reference numeral 101, may be detected and stored as an imbalance reference. Thereby, the imbalance reference may be stored in a memory unit prior to measuring an actual imbalance of the rotor.

Then, an unusual operational condition of the wind turbine may be determined on basis of an imbalance deviation of a measured actual imbalance from the imbalance reference. It may be evaluated whether the imbalance deviation is above a predetermined imbalance threshold value, and from this evaluation, an unusual operational condition of the wind turbine due to e.g. ice load or icing at the blades may be determined. According to a typical embodiment, which may be combined with other embodiments described herein, the imbalance reference may be provided as a function which is based on at least one of a wind velocity, an actual rotor position, a rotational frequency of the rotor, and an environmental temperature. Furthermore, the imbalance reference may be provided as a constant value. Moreover, the reference imbalance may be set as an imbalance value larger than zero.

The rotational frequency of the rotor shaft 44, i.e. the rotor frequency, may be measured separately by means of an appropriate rotation sensor such that at least one bending moment may be evaluated by taking into account the measured rotational frequency. Thereby, bending moment measurements may be correlated with a rotational position and/or a rotor angle of the rotor. Thereby, measuring a rotational frequency of the rotor shaft 44 allows evaluating the bending moment at a rotational position and/or a rotor angle derived by the measured rotational frequency. Thus, rotor imbalance may be detected by measuring a component of the bending moment in the rotor frequency. According to another typical embodiment, preset time intervals may be preset such that the bending moment may be evaluated periodically in the preset time intervals. Bending moment measurements may be carried out, e.g. at preset moments in time, e.g. once a minute or each quarter of an hour.

According to yet another typical embodiment, an icing indication may be provided if both the imbalance deviation is above the imbalance threshold value and the measured environmental temperature is below a predetermined temperature threshold value which may be in a range from -5°C to +10°C, typically in a range from 0°C to +5°C, and more typically may be below a temperature value of approximately +2°C.

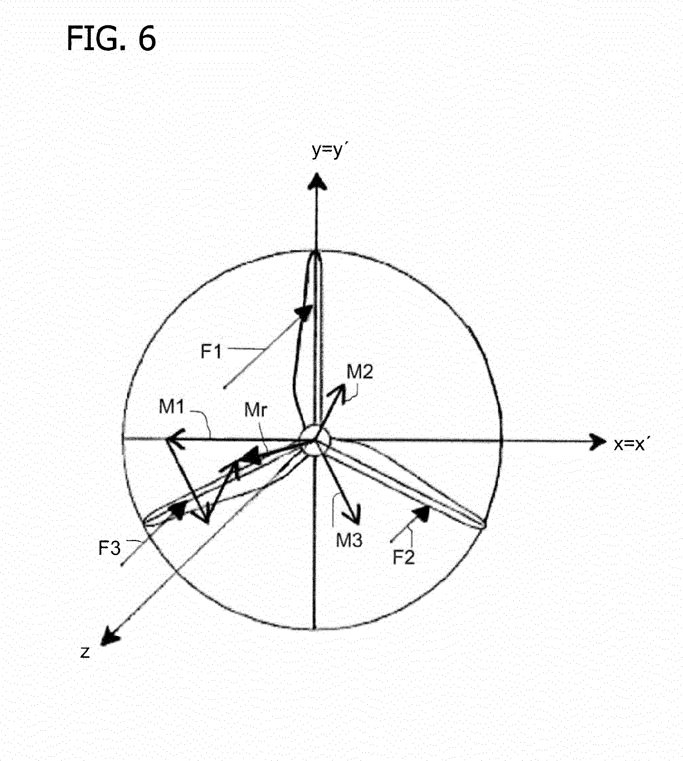

Figure 6 shows blade forces and resulting bending moments for a first rotational position of the rotor. As indicated in Figure 6, which is a view in the z-direction, three bending moments M1, M2, and M3 are generated. It is noted here that the individual forces F1, F2, and F3 are respectively oriented parallel to the z-axis. Thereby, a force F1 applied at the first rotor blade 22 results in a bending moment M1 (arrow to the left in Figure 6), a force F2 applied at the second rotor blade 22 results in a bending moment M2, and a force F3 applied at the third rotor blade 22 results in a bending moment M3. The three bending moments may add up to yield a resulting bending moment *Mr* according to the following equation.

$$\overrightarrow{Mr} = \overrightarrow{M1} + \overrightarrow{M2} + \overrightarrow{M3}.$$

The bending moment $\overrightarrow{Mr}$ is a vector which is also indicated in Figure 6. In order to determine rotor imbalance bending moments are accumulated in a rotating frame for a period of time. According to a typical embodiment, four proximity sensors are read out in order to evaluate a displacement vector in a fixed frame which then is transferred to a rotating frame by a frame transformation.

$$\overrightarrow{Mr} = \overrightarrow{Mx'} + \overrightarrow{My'}$$

Such kind of frame transfer permits filtering of noise and disturbing frequencies except the rotational frequency of the rotor 18 ("1P" frequency). It is noted here that a displacement detected by the proximity sensors may be converted into a bending moment by using a conversion factor which is given in Nm/mm. In order to evaluate a rotor imbalance an accumulation of absolute value and direction of the imbalance may be performed during a specific period of time in order to avoid transitional components.

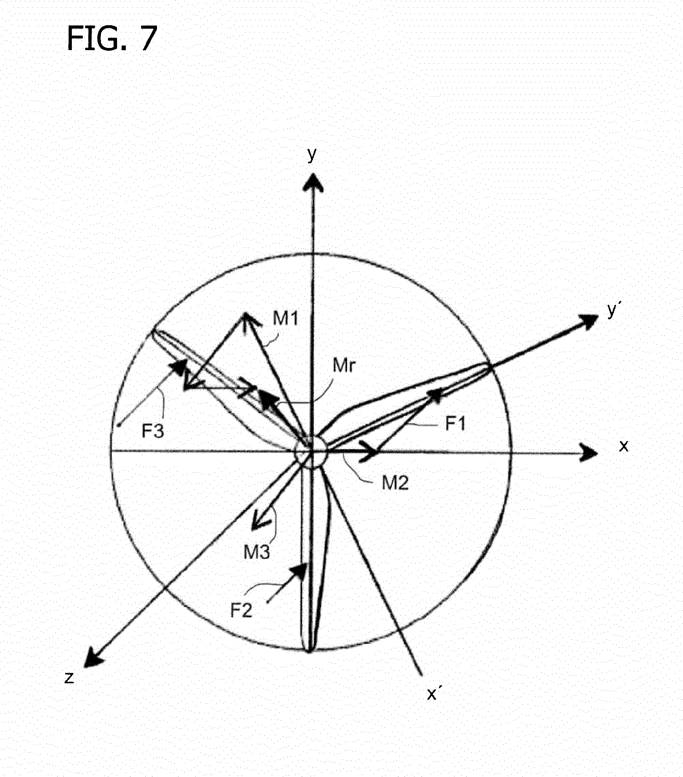

Figure 7 shows blade forces and resulting bending moments for a second rotational position of the rotor 18. As compared to the coordinate system (x, y, z) of Figure 6, the coordinate system (x', y', z') of Figure 7 has been rotated about the z-axis. Bending moments thus may be evaluated with respect to the rotating coordinate system (x', y'). According to the following equation, a mean absolute value of the resulting bending moment may be evaluated.

$$Mr = \sqrt{Mx'^2 + My'^2}$$

A mean value of the direction of the resulting bending moment is given by the following equation.

$$dir(Mr) = arctg(\frac{My'}{Mx'}).$$

With reference to Figures 6 and 7, and using the above equations, it is now described how detection of an unusual operational condition of the wind turbine due to e.g. ice load at at least one rotor blade 22 may be carried out. At first, it is assumed that the rotor blades 18 are free of ice, i.e. rotor imbalance is solely caused by imperfections in manufacturing of the rotor and/or the blades and/or other components of the rotor. In low temperature conditions, this resulting bending moment $\overrightarrow{Mr}$ may change due to environmental conditions such as ice impact. Such variation of the bending moment may be used to detect ice load.

In other words, ice load at at least one rotor blade of a wind turbine may be detected by performing the steps of measuring a first bending moment of the rotor shaft 44, evaluating a first rotor imbalance on basis of the first bending moment, measuring at least one second bending moment of the rotor shaft 44, and evaluating a second rotor imbalance on basis of the second bending moment. Then, the second rotor imbalance may be compared with the first rotor imbalance such that the ice load at the rotor blade 22 may be evaluated on basis of the comparison. The evaluation unit 108 described herein above with respect to Figure 4 thus is used for evaluating the ice load on basis of a variation of the rotor imbalance.

The bending moment may be continuously evaluated when the wind turbine 10 is operated, e.g. in a normal operational condition. A histogram-like measurement series of imbalance moments may be stored in a memory unit. In order to evaluate the imbalance moment a moving average according to the following formula may be used. According to a typical embodiment the evaluation unit may include a moving-average generator 110 for providing the moving average of detected bending moments. Thus, averaging may be performed using the two equations which follow below.

A moving average of the bending moment may be evaluated by using the relations according to the following two equations. The resulting actual bending moment may be determined in accordance with the following equation for the absolute value:

$$Mr_{hist} = \frac{Mr + k\, Mr_{hist-1}}{k+1}$$, and for the direction of the resulting actual bending moment in accordance with the following equation:

$$dir(Mr)_{hist} = \frac{dir(Mr) + k\, dir(Mr)_{hist-1}}{k+1}$$, wherein k is a running index for averaging, dir(...) denotes a direc-

tion, and $M_{hist}$ denotes a bending moment which may be continuously measured. According to a typical embodiment, the monitoring system may be activated once the environmental temperature of the wind turbine 10 falls below a predetermined value, e.g. below a value of 2°C. Then, the values given by the two above equations (first rotor imbalance) may be compared with an actual rotor imbalance (second rotor imbalance). If the difference between the second rotor imbalance and the first rotor imbalance exceeds a certain limit, ice coating may be assumed. The difference in rotor imbalance may be expressed by the following two relations which are based on bending moment measurement. A deviation of the actual bending moment Mr from a historical value of the bending moment $M_{hist}$ may include determining whether a relation between a magnitude of the historical bending moment $M_{hist}$ and a magnitude of the actual bending moment Mr satisfies the inequality

$$abs(\frac{Mr}{Mr_{hist}} - 1) \geq \varepsilon_1,$$

wherein $\varepsilon_1$ is an imbalance threshold value and is in a range from 1% to 30%, typically in a range from 5% to 20%, and more typically in a range from 10% to 15%. Thus, a predetermined imbalance threshold value may be derived using $\varepsilon_1$ on basis of the actual bending moment Mr and a historical value of the bending moment $M_{hist}$. Furthermore, a deviation of the bending moment Mr from a historical value of the bending moment $M_{hist}$ may include determining whether a difference between a direction of the historical bending moment $M_{hist}$ and a direction of the actual bending moment Mr satisfies the inequality

$$abs(dir(Mr)_{hist} - dir(Mr)) \geq \varepsilon_2 ,$$

wherein dir(...) denotes a direction and $\varepsilon_2$ is an imbalance direction threshold value and is in a range from 1° to 45°, typically in a range from 3° to 30°, and more typically in a range from 5° to 10°, and wherein abs(...) denotes an absolute value of the expressions in brackets. A predetermined imbalance threshold value may be derived using $\varepsilon_2$ on basis of the actual bending moment Mr and a historical value of the bending moment $M_{hist}$. Thus, if one or both of the above inequalities are fulfilled, an indication may be provided that an unusual operational condition of the wind turbine due to e.g. ice load at at least one of the rotor blades is detected. The parameters $\varepsilon_1$, $\varepsilon_2$ may be set as constant values which may be defined in test procedures performed at a wind turbine 10 or may vary on basis of predetermined functions, e.g. dependent on environmental conditions of the wind turbine.

According to another typical embodiment, if a first imbalance threshold value th1 and at least a second imbalance threshold value th2 are provided, the second imbalance threshold value th2 may be set larger than the first imbalance threshold value th1. The first control action may be carried out if the magnitude of the actual bending moment is larger than the first imbalance threshold value th1 and lower than the second imbalance threshold value th2, as indicated by the following relation:

$$th1 < abs(\frac{Mr}{Mr_{hist}} - 1) < th2$$

Furthermore, at least a second control action may be carried out if the magnitude of the actual bending moment is larger than the second imbalance threshold value th2, as indicated by the following relation:

$$th2 < abs(\frac{Mr}{Mr_{hist}} - 1) .$$

As an example, the first imbalance threshold value th1 may be set at 5% and the second imbalance threshold value th2 may be set at 15%. Moreover, one or more additional imbalance threshold values may be provided, e.g. to assume values of 20%, 25%, and 30%.
According to yet another typical embodiment, if a first imbalance direction threshold value thd1 and at least a second imbalance direction threshold value thd2 are provided, the second imbalance direction threshold value thd2 may be set larger than the first imbalance direction threshold value thd1. The first control action may be carried out if a difference between a direction of the historical bending moment $M_{hist}$ and a direction of the actual bending moment Mr is larger than the first imbalance direction threshold value thd1 and lower than the second imbalance direction threshold value thd2, as indicated by the following relation:

$$thd1 < abs(dir(Mr)_{hist} - dir(Mr)) < thd2$$

Furthermore, at least a second control action may be carried out if a difference between a direction of the historical bending moment $M_{hist}$ and a direction of the actual bending moment Mr is larger than the first imbalance direction threshold value thd2, as indicated by the following relation:

$$thd2 < abs(dir(Mr)_{hist} - dir(Mr)) .$$

As an example, the first imbalance direction threshold value thd1 may be set at 1° and the second imbalance direction threshold value th2 may be set at 10°. Moreover, one or more additional imbalance direction threshold values may be provided, e.g. to assume values of 20°, 25°, and 45°.

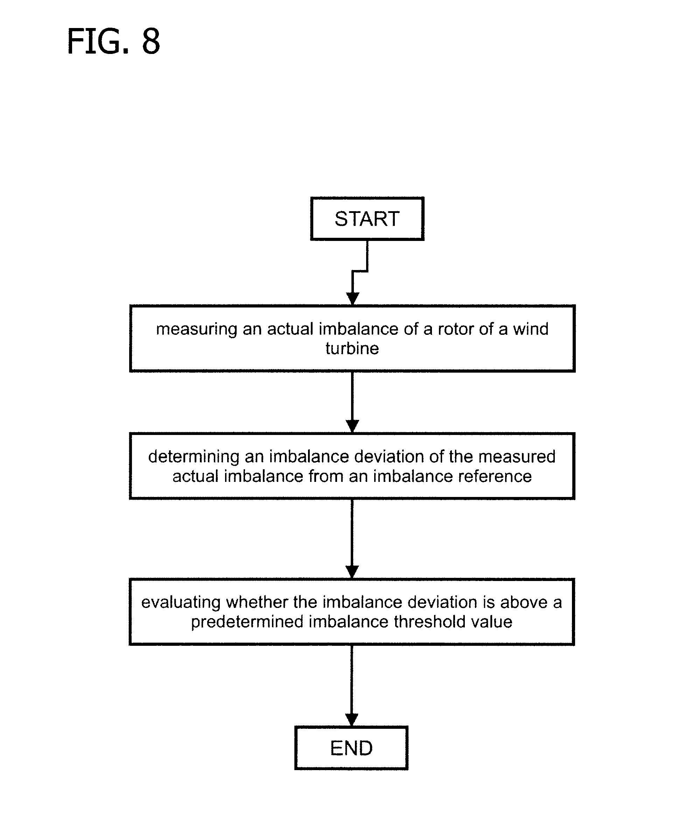

Figure 8 is a block diagram illustrating a method for detecting an unusual operational condition of a wind turbine. The method includes steps of measuring an actual imbalance of the rotor of the wind turbine, determining an imbalance deviation of the measured actual imbalance from an imbalance reference, and evaluating whether the imbalance deviation is above a predetermined imbalance threshold value.

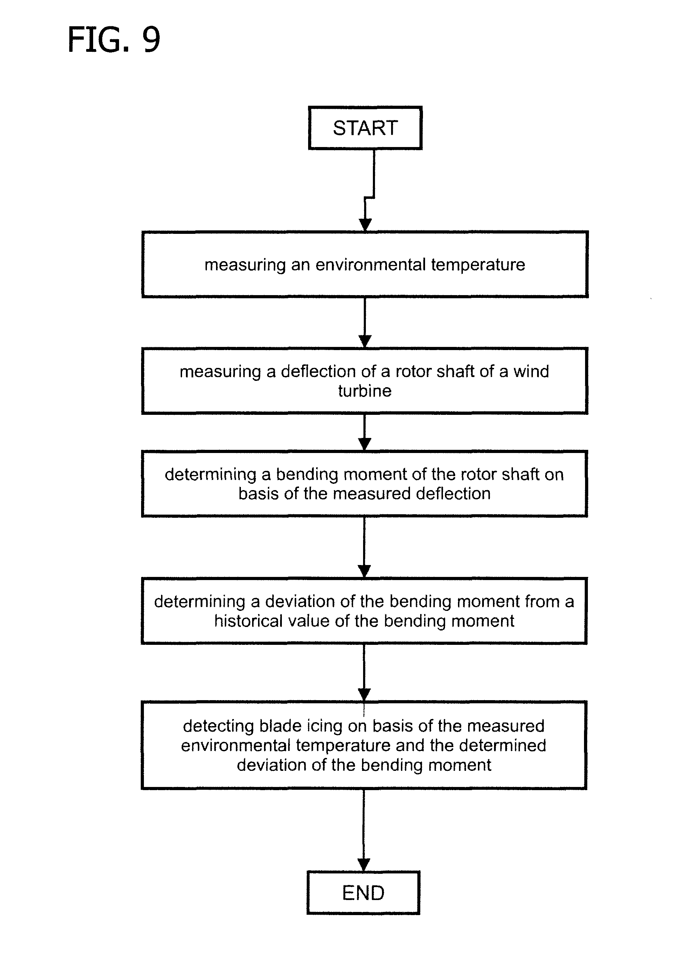

Figure 9 is a block diagram illustrating a method for detecting an unusual operational condition of a wind turbine. The method includes steps of measuring an environmental temperature, measuring a deflection of the rotor shaft 44 of the wind turbine, determining a bending moment of the rotor shaft 44 on basis of the measured deflection, determining a deviation of the bending moment from a historical value of the bending moment, and detecting blade icing on basis of the measured environmental temperature and the determined deviation.

Exemplary embodiments of systems and methods for detection of blade icing at wind turbines are described above in detail. The systems and methods are not limited to the specific embodiments described herein, but rather, components of the systems and/or steps of the methods may be utilized independently and separately from other components and/or steps described herein. For example, the monitoring system for detecting a rotor imbalance is not limited to practice with only the wind turbine systems as described herein. Rather, the exemplary embodiment can be implemented and utilized in connection with many other rotor blade applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:

1. A method for detecting an unusual operational condition of a wind turbine, the method comprising:

measuring an actual imbalance of a rotor of said wind turbine;

determining an imbalance deviation of the measured actual imbalance from an imbalance reference; and

evaluating whether the imbalance deviation is above a predetermined imbalance threshold value.

2. The method according to clause 1, wherein the imbalance reference is a constant value.

3. The method according to any preceding clause, wherein the imbalance reference is provided as a function which is based on at least one of a wind velocity, an actual rotor position, a rotational frequency of the rotor, and an environmental temperature.

4. The method according to any preceding clause, wherein the reference imbalance is varied on basis of environmental conditions of the wind turbine.

5. The method according to any preceding clause, further comprising measuring an environmental temperature of the wind turbine.

6. The method according to any preceding clause, wherein an icing indication is provided if both the imbalance deviation is above the predetermined imbalance threshold value and the measured environmental temperature is below a temperature threshold value which is within a range from -5°C to +10°C.

7. The method according to any preceding clause, wherein the imbalance reference is stored in a memory unit prior to measuring an actual imbalance of the rotor.

8. A method for blade icing detection at a wind turbine, the method comprising:

measuring an environmental temperature;

measuring a deflection of a rotor shaft of said wind turbine;

determining a bending moment of the rotor shaft on basis of the measured deflection;

determining a deviation of the bending moment from a historical value of the bending moment; and

detecting blade icing on basis of the measured environmental temperature and the determined deviation of the bending moment.

9. The method according to any preceding clause, further comprising determining whether the measured temperature is below a predetermined temperature threshold value.

10. The method according to any preceding clause, wherein the predetermined temperature threshold value is within a range from -5°C to +10°C.

11. The method according to any preceding clause, wherein determining a deviation of the bending moment comprises determining whether a ratio between a magnitude of the actual bending moment and a magnitude of the historical bending moment satisfies the inequality $abs(\frac{Mr}{Mr_{hist}}-1)\geq\varepsilon_1$, wherein $\varepsilon_1$ is an imbalance threshold value.

12. The method according to any preceding clause, wherein determining a deviation of the bending moment comprises determining whether a difference between a direction of the historical bending moment and a direction of the actual bending moment satisfies the inequality $abs(dir(Mr)_{hist}-dir(Mr))\geq\varepsilon_2$, wherein $dir(...)$ denotes the direction of a moment and $\varepsilon_2$ is an imbalance direction threshold value.

13. The method according to any preceding clause, wherein at least a first imbalance threshold value and at least a second imbalance threshold value are provided, the second threshold value being larger than the first threshold value, wherein a first control action is carried out if the magnitude of the actual bending moment is larger than the first threshold value and lower than the second threshold value, and wherein at least a second control action is carried out if the magnitude of the actual bending moment is larger than the second threshold value.

14. The method according to any preceding clause, further comprising measuring a rotational frequency of the rotor shaft and evaluating the bending moment at a rotational position and/or a rotor angle derived by the measured rotational frequency.

15. The method according to any preceding clause, further comprising defining preset time intervals and evaluating the bending moment periodically in the preset time intervals.

16. The method according to any preceding clause, wherein determining an actual bending moment comprises evaluating a moving average of the bending moment by using at least one of the relations $Mr_{hist}=\frac{Mr+k\,Mr_{hist-1}}{k+1}$

$$\text{and } dir(Mr)_{hist} = \frac{dir(Mr) + k\, dir(Mr)_{hist-1}}{k+1}, \text{ wherein k is a running index for averaging and dir(...) denotes}$$

a direction of a moment.

17. A wind turbine, comprising:

a detection unit for detecting an unusual operational condition of the wind turbine, the detection unit having at least one proximity sensor for measuring a deflection of a rotor shaft of the wind turbine;

a determination unit for determining a rotor imbalance on basis of the measured deflection; and

an evaluation unit for comparing the determined rotor imbalance with an imbalance reference.

18. The wind turbine according to any preceding clause, further comprising a temperature sensor for detecting an environmental temperature of the wind turbine.

19. The wind turbine according to any preceding clause, wherein the detection unit comprises at least two proximity sensors arranged at about 90° with respect to each other about a circumference of the rotor shaft to measure the bending moment about two approximately orthogonal axes.

20. The wind turbine according to any preceding clause, further comprising a memory unit for storing a historical value of the rotor imbalance as an imbalance reference.

**Claims**

1.  A method for detecting an unusual operational condition of a wind turbine (10), the method comprising:

    measuring an actual imbalance of a rotor (18) of said wind turbine (10);
    determining an imbalance deviation of the measured actual imbalance from an imbalance reference; and
    evaluating whether the imbalance deviation is above a predetermined imbalance threshold value.

2.  The method according to claim 1, wherein the imbalance reference is provided as a function which is based on at least one of a wind velocity, an actual rotor position, a rotational frequency of the rotor (18), and an environmental temperature.

3.  The method according to any of the preceding claims, further comprising measuring an environmental temperature of the wind turbine (10).

4.  The method according to claim 3, wherein an icing indication is provided if both the imbalance deviation is above the predetermined imbalance threshold value and the measured environmental temperature is below a temperature threshold value which is within a range from -5°C to +10°C.

5.  A method for blade icing detection at a wind turbine (10), the method comprising:

    measuring an environmental temperature;
    measuring a deflection of a rotor shaft (44) of said wind turbine (10);
    determining a bending moment (Mr) of the rotor shaft (44) on basis of the measured deflection;
    determining a deviation of the bending moment (Mr) from a historical value of the bending moment; and
    detecting blade icing on basis of the measured environmental temperature and the determined deviation of the bending moment (Mr).

6.  The method according to claim 5, further comprising determining whether the measured temperature is below a predetermined temperature threshold value.

7.  The method according to any of claims 5 or 6, wherein determining a deviation of the bending moment (Mr) comprises determining whether a ratio between a magnitude of the actual bending moment and a magnitude of the historical bending moment (Mr) satisfies the inequality $abs(\frac{Mr}{Mr_{hist}} - 1) \geq \varepsilon_1$, wherein $\varepsilon_1$ is an imbalance threshold value.

8. The method according any of claims 5 to 7, wherein determining a deviation of the bending moment (Mr) comprises determining whether a difference between a direction of the historical bending moment and a direction of the actual bending moment (Mr) satisfies the inequality $abs(dir(Mr)_{hist} - dir(Mr)) \geq \varepsilon_2$, wherein dir(...) denotes the direction of a moment and $\varepsilon_2$ is an imbalance direction threshold value.

9. A wind turbine (10), comprising:

a detection unit (105) for detecting an unusual operational condition of the wind turbine (10), the detection unit (105) having at least one proximity sensor for measuring a deflection of a rotor shaft (44) of the wind turbine (10);
a determination unit for determining a rotor imbalance on basis of the measured deflection; and
an evaluation unit for comparing the determined rotor imbalance with an imbalance reference.

10. The wind turbine (10) according to claim 9, further comprising a temperature sensor (109) for detecting an environmental temperature of the wind turbine (10).

# FIG. 1

FIG. 2

# FIG. 3

FIG. 4

# FIG. 5

FIG. 6

# FIG. 7

# FIG. 8

```
            ┌──────────────┐
            │    START     │
            └──────┬───────┘
                   │
                   ▼
┌──────────────────────────────────────────┐
│  measuring an actual imbalance of a rotor │
│         of a wind turbine                 │
└──────────────────┬───────────────────────┘
                   │
                   ▼
┌──────────────────────────────────────────┐
│ determining an imbalance deviation of the │
│  measured actual imbalance from an        │
│         imbalance reference               │
└──────────────────┬───────────────────────┘
                   │
                   ▼
┌──────────────────────────────────────────┐
│ evaluating whether the imbalance deviation│
│  is above a predetermined imbalance       │
│         threshold value                   │
└──────────────────┬───────────────────────┘
                   │
                   ▼
            ┌──────────────┐
            │     END      │
            └──────────────┘
```

# FIG. 9

```
┌─────────────┐
│    START    │
└─────────────┘
       │
       ▼
┌──────────────────────────────────────────────┐
│      measuring an environmental temperature    │
└──────────────────────────────────────────────┘
       │
       ▼
┌──────────────────────────────────────────────┐
│  measuring a deflection of a rotor shaft of a  │
│                 wind turbine                    │
└──────────────────────────────────────────────┘
       │
       ▼
┌──────────────────────────────────────────────┐
│  determining a bending moment of the rotor     │
│  shaft on basis of the measured deflection     │
└──────────────────────────────────────────────┘
       │
       ▼
┌──────────────────────────────────────────────┐
│  determining a deviation of the bending moment │
│  from a historical value of the bending moment │
└──────────────────────────────────────────────┘
       │
       ▼
┌──────────────────────────────────────────────┐
│   detecting blade icing on basis of the        │
│   measured environmental temperature and the   │
│   determined deviation of the bending moment   │
└──────────────────────────────────────────────┘
       │
       ▼
┌─────────────┐
│     END     │
└─────────────┘
```